# EUROPÄISCHE PATENTANMELDUNG

(11) **EP 1 162 287 A2**
(43) Veröffentlichungstag der Anmeldung: **12.12.2001**
(21) Anmeldenummer: 01112771.9
(22) Anmeldetag: 26.05.2001
(51) Int. Cl.: C23G 3/02, G01J 5/00

(54) **Verfahren und Einrichtung zum Beizen eines gewalzten Metallstrangs, insbesondere eines Stahlbandes**

(30) Priorität: 06.06.2000 DE 10028058
(71) Anmelder: SMS Demag AG, 40237 Düsseldorf (DE)
(72) Erfinder: Volz, Stefan, 41468 Grimmlinghausen (DE); Schüler, Peter, 45665 Recklinghausen (DE)
(74) Vertreter: Grosse, Dietrich, Dipl.-Ing.

(57) **Zusammenfassung**

Bei einem Verfahren zum Beizen eines gewalzten Metallstrangs (1), insbesondere eines Stahlbandes (1a), der kontinuierlich durch ein Beizbecken (2a) und durch ein Spülbecken (2b) bewegt wird, finden berührungslos arbeitende Infrarot-Strahlungsdetektoren (3) - Pyrometer - Anwendung, die Zunder (4) oder Zunderstrukturen (5) auf der Metallstrangoberfläche (1b) detektieren.

## Beschreibung

Die Erfindung betrifft ein Verfahren und eine Einrichtung zum Beizen eines gewalzten Metallstrangs, insbesondere eines Stahlbandes, der kontinuierlich durch ein Beizbecken und / oder durch ein Spülbecken bewegt wird.

Es sind verschiedene Verfahren bekannt, um Strahlung von heißen Gegenständen zu messen. So werden z.B. Pyrometer in Intervallen in die Nähe des heißen Gegenstandes angestellt und wieder zurückgezogen (US 4, 408, 878).

Bei einem verfahren zum Verzinken eines Bandes wird das Band kontinuierlich mit Zink beschichtet und einer Wärmebehandlung in einem Durchlaufofen zur Bildung einer Zn-Fe-Schicht unterzogen. Dabei ist die Strahlungs-Emission der Bandoberfläche mittels mindestens eines Pyrometers zu messen.

Weiterhin ist eine Pyrometer-Anordnung zum Bestimmen der Temperatur eines sich längsbewegenden, langgestreckten Körpers bekannt ( EP 0 665 949 B1). Es wird ein Prozesssteuer-Pyrometer eingesetzt, das zum Erfassen unbeschichteter Teile der Oberfläche des Körpers ausgerichtet ist. Dabei ist es das Ziel, eine einheitliche Beschichtung aufzubringen und zwar aufgrund des Prozesssteuer-Pyrometers und eines Kalibrier-Pyrometers.

Der Erfindung liegt demgegenüber die Aufgabe zugrunde, beim Beizen von gewalzten Metallsträngen, insbesondere von Stahlbändern, die Strangoberfläche zu kontrollieren.

Die gestellte Aufgabe wird erfindungsgemäß dadurch gelöst, dass ein berührungslos arbeitender Infrarot-Strahlungsdetektor zum Detektieren von Zunder oder Zunderstrukturen auf der Metallstrangoberfläche verwendet wird. Pyrometer messen die vom Messobjekt abgegebene Wärme- oder Infrarotstrahlung. Die Intensität dieser Strahlung ist eng korreliert mit der tatsächlichen Temperatur der Messobjektoberfläche. Die Pyrometrie war in ihrem Anfangsentwicklungsstadium eine rein visuelle Methode zur Temperaturbestimmung und Pyrometer wurden nur zur Messung hoher Temperaturen bei entsprechender Strahlungsemission eingesetzt. Inzwischen sind jedoch hochempfindliche und langzeitstabile Infrarot-Strahlungsdetektoren verfügbar, mit denen niedrige Temperaturen bis weit unterhalb des Gefrierpunktes berührungslos bestimmt werden können. Ein solcher Infrarot-Strahlungsdetektor eignet sich daher auch für die Ermittlung, ob auf einem Metallstrang Zunder oder Zunderstrukturen vorhanden sind, was für das Beizen oder Spülen von Metallbändern von erheblicher Bedeutung ist.

Vorteilhaft ist bei diesem Beiz- oder Spülverfahren, dass der Infrarot-Strahlungsdetektor in Wellenbereichen eingesetzt wird, die als sog. atmosphärische Fenster bezeichnet werden. In diesen Fenstern entsteht kein Messfehler durch Änderung der Luftfeuchtigkeit oder des Messabstandes, so dass Kohlendioxid keinen Fehler verursachen kann.

Eine Ausgestaltung sieht vor, dass der Infrarot-Strahlungsdetektor in Wellenlängen-Bereichen von ca. 8-14 µm eingesetzt wird. Dieser Bereich stellt das wichtigste "Fenster" in dem Niedertemperaturbereich dar. Mit diesem "Fenster" ist die vollständige Ausschaltung des Einflusses von Tages- oder Raumlicht auf das Messergebnis verbunden.

Eine Einrichtung zum Beizen eines gewalzten Metallstrangs, insbesondere eines Stahlbandes, der durch ein Beizbecken und / oder durch ein Spülbecken mit gleichbleibender Geschwindigkeit bewegbar ist und über eine Temperatur-Messvorrichtung eine fortlaufende Überwachung durchführbar ist, zeichnet sich dadurch zur Lösung der gestellten Aufgabe aus, dass ein oder mehrere Infrarot-Strahlungsdetektoren auf der Strecke des Beizbeckens und / oder des Spülbeckens einsetzbar sind.

Dabei ist es vorteilhaft, dass der Infrarot-Strahlungsdetektor zur Unterscheidung von verzunderten gegenüber zunderfreien Teilflächen der Metallstrangoberfläche dient. Dieses Messgerät ist stationär und messen immer auf dieselbe Stelle bzw. auf dem unter dem Pyrometer vorbeilaufenden Produkt. Da verzunderte Teilflächen eine niedrigere Temperatur abgeben, kann das Messgerät zwischen unverzunderten und verzunderten Flächen unterscheiden.

Hierzu ist als Ausgestaltung vorgesehen, dass der Infrarot-Strahlungsdetektor zur Unterscheidung von verschiedenen Zunderstrukturen durch unterschiedliche Emissionsgrade einstellbar ist. Der Emissionsgrad ist eine Größe, die angibt, welcher Anteil der theoretisch maximal möglichen Strahlung von der Objektoberfläche abgestrahlt wird und somit zur Messung zur Verfügung steht.

Nach einer anderen Verbesserung wird vorgeschlagen, dass an dem Infrarot-Strahlungsdetektor der Emissionsgrad in Abhängigkeit vom Werkstoff des Metallstrangs oder von der Oberflächenbeschaffenheit oder von dem Wellenlängenbereich einstellbar ist. Man teilt also dem Gerät mit, wie die zu messende Oberfläche beschaffen ist. Emissionsgrade sind in der Regel abhängig vom Material und von seiner Oberfläche sowie von der Wellenlänge, bei der das Pyrometer arbeitet.

Das am Ausgang des Infrarot-Strahlungsdetektors anstehende Signal kann vorteilhafterweise zur Anzeige (auf einem Monitor), zur Regelung (nachfolgender Vorrichtungen) oder zur Steuerung von Stellgliedern (an der Maschine des Beizbeckens) und / oder zur Aufzeichnung von Daten (in einem Speicherbaustein) verwendet werden.

Eine solche vorteilhafte Verwendung des Signals ist dahingehend gestaltet, dass an eine Steuereinrichtung, die mit dem Infrarot-Strahlungsdetektor kommuniziert, eine selektiv arbeitende Vorrichtung zum Abtragen von Zunder an den detektierten Teilflächen der Metallstrangoberfläche angeschlossen ist.

In der Zeichnung ist ein Ausführungsbeispiel der Erfindung schematisch dargestellt und wird nachfolgend näher erläutert.

Es zeigen:
- Fig. 1: in perspektivischer Ansicht ein horizontales Beizbecken mit durchlaufendem Stahlband, dessen Oberfläche mittels Infrarot-Detektoren überwacht wird und
- Fig. 2: eine perspektivische Teilansicht einer vertikalen Beize.

Das Verfahren zum Beizen eines gewalzten Metallstrangs 1, insbesondere eines Stahlbandes 1a, wird ausgeübt während der kontinuierlichen Bewegung in Bewegungsrichtung 6 durch ein Beizbeck3en 2a und durch ein Spülbecken 2b. Dabei wird ein berührungslos arbeitender Infrarot-Strahlungsdetektor 3 (Pyrometer) zum Detektieren von Zunder 4 oder Zunderstrukturen 5 auf Teilflächen 1c angewendet. Am Eingang des Beizbeckens 2a findet so z.B. eine Messung der Zunderflecke von zwar schon gebeiztem, aber nicht fertig gebeiztem Stahlband 1a statt.

Es kann auch zusätzlich eine Temperaturmessung erfolgen, die gezielt in ein Regelmodell als weiterer Parameter eingreift. Dadurch wird das Problem von großen Temperaturschwankungen des Stahlbandes 1 a gelöst, wodurch in dem Wärmehaushalt des Beizbeckens 2a eingegriffen werden kann. Zwischen den Beiztanks findet sodann eine temporäre Verstärkung der Beizwirkung in den nachgeschalteten Beiztanks statt. Weitere Infrarot-Strahlungsdetektoren 3 sind in Bewegungsrichtung 6 hinter dem Spülbecken 2b angeordnet, die das Beizergebnis detektieren und eine Nachregulierung in einem Beiz-Prozessrechner veranlassen.

Für den Fall, dass sich aus der Messung der Temperatur für die Metallstrangoberfläche 1b bessere Messergebnisse ergeben, ist vor einem oder einer Gruppe von Infrarot-Strahlungsdetektoren 3 jeweils ein Luftmesser angeordnet, das der Einfachheit halber hier nur nicht gezeichnet ist, jedoch eine trockene Metallstrangoberfläche 1b erzeugt.

Die Infrarot-Strahlungsdetektoren 3 werden in Wellenbereichen eingesetzt, die als sog. atmosphärisches Fenster bezeichnet werden. Die Infrarot-Strahlungsdetektoren 3 arbeiten in Wellenlängen-Bereichen von ca. 8 - 14 µm.

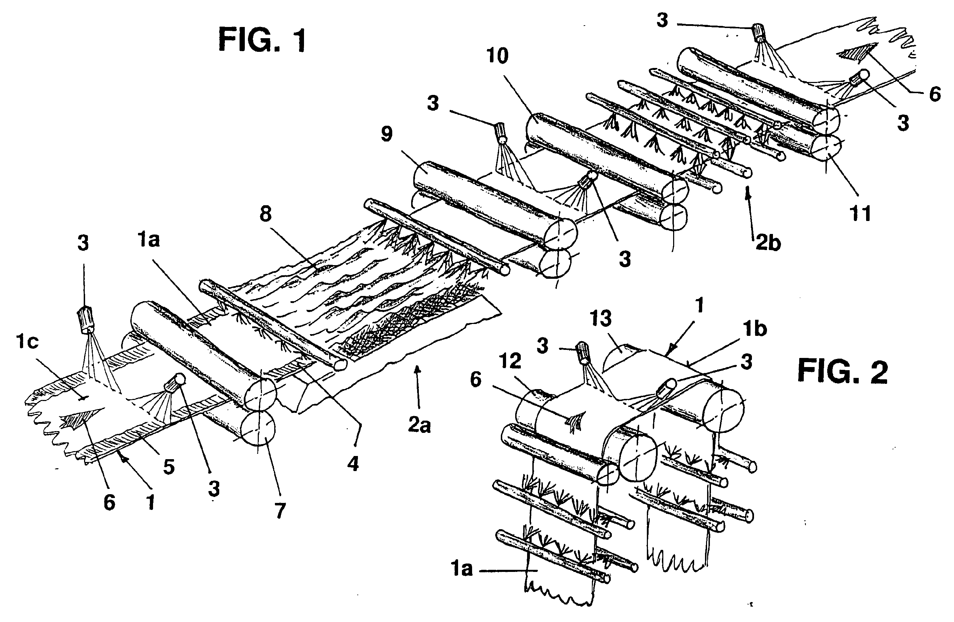

Die gemäß Fig. 1 in Bewegungsrichtung 6 eingesetzten Infrarot-Strahlungsdetektoren 3 dienen im wesentlichen zur Unterscheidung von verzunderten gegenüber zunderfreien Teilflächen 1c der Metallstrangoberfläche 1b. Es werden dabei auch verschiedene Zunderstrukturen 5 durch unterschiedliche Emissionsgrade gemessen. An den Infrarot-Strahlungsdetektor 3 ist der Emissionsgrad in Abhängigkeit vom Werkstoff des Metallstrangs 1 oder von dem Wellenlängenbereich eingestellt.

Der Metallstrang 1 wandert sodann von Transportwalzenpaaren 7 angetrieben in das Beizbecken 2a und wird dort durch turbulente Strömung 8 gebeizt. Zwischen weiteren Transportwalzenpaaren 9 und 10 finden weitere Messungen durch weitere Infrarot-Strahlungsdetektoren 3 statt, wonach der Metallstrang 1 in das Spülbecken 2b einläuft und gespült wird. Anschließend an das durch die Transportwalzenpaare 10 und 11 begrenzte Spülbecken 2b findet eine abschließende Messung zur Feststellung des Entzunderungsgrades mittels weiteren Infrarot-Strahlungsdetektoren 3 statt. Das jeweils am Ausgang eines Infrarot-Strahlungsdetektors 3 anstehende Signal wird zur Regelung und / oder zur Ansteuerung von Stellgliedern und zur Anzeige und / oder zur Aufzeichnung und Speicherung von Daten verwendet.

Gemäß Fig. 2 ist in einem Ausschnitt eine Vertikalbeize dargestellt, in der das Stahlband 1a vertikal von unten nach oben in Bewegungsrichtung 6 über Umlenkrollen 12 und 13 verläuft und im übrigen wie beschrieben mittels Infrarot-Strahlungsdetektoren 3 überwacht wird und die Messergebnisse wie beschrieben verwendet werden.

### Bezugszeichenliste

- 1: Metallstrang
- 1a: Stahlband
- 1b: Metallstrangoberfläche
- 1c: Teilfläche
- 2a: Beizbecken,
- 2b: Spülbecken
- 3: Infrarot-Strahlungsdetektor
- 4: Zunder
- 5: Zunderstruktur
- 6: Bewegungsrichtung
- 7: Transportwalzenpaare
- 8: turbulente Strömung
- 9: Transportwalzenpaar
- 10: Transportwalzenpaar
- 11: Transportwalzenpaar
- 12: Umlenkrolle
- 13: Umlenkrolle

## Patentansprüche

1. Verfahren zum Beizen eines gewalzten Metallstrangs, insbesondere eines Stahlbandes, der kontinuierlich durch ein Beizbecken und durch ein Spülbekken bewegt wird,
**gekennzeichnet durch** die Verwendung eines berührungslos arbeitenden Infrarot-Strahlungsdetektors (Pyrometer) zum Detektieren von Zunder oder Zunderstrukturen auf der Metallstrangoberfläche.

2. Verfahren nach Anspruch 1,
**dadurch gekennzeichnet,**
**dass** der Infrarot-Strahlungsdetektor in Wellenbereichen eingesetzt wird, die als sog. atmosphärische Fenster bezeichnet werden.

3. Verfahren nach Anspruch 2,
**dadurch gekennzeichnet,**
**dass** der Infrarot-Strahlungsdetektor in Wellenlängen-Bereichen von ca. 8-14 µm eingesetzt wird.

4. Einrichtung zum Beizen eines gewalzten Metallstrangs, insbesondere eines Stahlbandes, der durch ein Beizbecken und durch ein Spülbecken mit gleichbleibender Geschwindigkeit bewegbar ist und über eine Temperatur-Messvorrichtung eine fortlaufende Überwachung durchführbar ist,
**dadurch gekennzeichnet,**
**dass** ein oder mehrere Infrarot-Strahlungsdetektoren (3) auf der Strecke des Beizbeckens (2a) und / oder des Spülbeckens (2b) einsetzbar sind.

5. Einrichtung nach Anspruch 4,
**dadurch gekennzeichnet,**
**dass** der Infrarot-Strahlungsdetektor (3) zur Unterscheidung von verzunderten gegenüber zunderfreien Teilflächen (1c) der Metallstrangoberfläche (1b) dient.

6. Einrichtung nach einem der Ansprüche 4 oder 5,
**dadurch gekennzeichnet,**
**dass** der Infrarot-Strahlungsdetektor (3) zur Unterscheidung von verschiedenen Zunderstrukturen (5) durch unterschiedliche Emissionsgrade einsetzbar ist.

7. Einrichtung nach einem der Ansprüche 4 bis 6,
**dadurch gekennzeichnet,**
**dass** an dem Infrarot-Strahlungsdetektor (3) der Emissionsgrad in Abhängigkeit vom Werkstoff des Metallstranges (1) oder von der Beschaffenheit der Metallstrangoberfläche (1b) oder von dem Wellenlängenbereich abhängig einstellbar ist.

8. Einrichtung nach einem der Ansprüche 4 bis 7,
**dadurch gekennzeichnet,**
**dass** das am Ausgang des Infrarot-Strahlungsdetektors (3) anstehende Signal zur Anzeige, zur Regelung oder zur Steuerung von Stellgliedern und / oder zur Aufzeichnung von Daten verwendbar ist.

9. Einrichtung nach einem der Ansprüche 4 bis 8,
**dadurch gekennzeichnet,**
**dass** an eine Steuereinrichtung , die mit dem Infrarot-Strahlungsdetektor (3) kommuniziert, eine selektiv arbeitende Vorrichtung zum Abtragen von Zunder (4) an den detektierten Teilflächen (1c) der Metallstrangoberfläche (1b) angeschlossen ist.
